# EUROPÄISCHE PATENTSCHRIFT

(11) **EP 3 068 560 B1**
(45) Veröffentlichungstag und Bekanntmachung des Hinweises auf die Patenterteilung: **31.07.2019**
(21) Anmeldenummer: 14795584.3
(22) Anmeldetag: 28.10.2014
(51) Int. Cl.: B22C 9/10, B22D 25/02, B22D 25/06, B22D 27/04, F16C 3/08, F16H 53/02

(54) **KOMPLEXES GUSSBAUTEIL SOWIE GIESSVERFAHREN HIERFÜR**
COMPLEX CAST COMPONENT AND CASTING METHOD THEREFOR
PIÈCE MOULÉE COMPLEXE ET PROCÉDÉ DE COULÉE AFFÉRENT

(30) Priorität: 14.11.2013 DE 102013223179
(43) Veröffentlichungstag der Anmeldung: 21.09.2016
(73) Patentinhaber: Bayerische Motoren Werke Aktiengesellschaft, 80809 München (DE)
(72) Erfinder: HUBER, Markus, 80801 München (DE)
(74) Vertreter: Duca, Christian
(86) Internationale Anmeldenummer: PCT/EP2014/073060
(87) Internationale Veröffentlichungsnummer: WO 2015/071084

(56) Entgegenhaltungen:
- EP-A1- 1 767 288
- DE-A1- 19 651 392
- DE-C- 678 539
- GB-A- 481 928
- GB-A- 694 277
- JP-A- 2004 025 260
- US-A- 2 109 083
- US-A- 4 191 238

## Beschreibung

Die vorliegende Erfindung betrifft ein komplexes Gussbauteil einer Brennkraftmaschine, eine Brennkraftmaschine mit einem komplexen Gussbauteil, ein Kraftfahrzeug mit einer entsprechenden Brennkraftmaschine sowie ein Gießverfahren zum Herstellen eines komplexen Gussbauteils. Unter dem Begriff komplexes Gussbauteil einer Brennkraftmaschine wird nachfolgend eine gegossene Kurbelwelle oder Nockenwelle verstanden.

Gemäß Stand der Technik werden Kurbelwellen bei heutigen Otto- und Dieselmotoren aus Eisenwerkstoffen mittels Schmieden oder Gießen gefertigt. Bei den geschmiedeten Kurbelwellen werden als Material beispielsweise Vergütungsstähle wie 42CrMo4 verwendet. Demgegenüber wird bei den gegossenen Kurbelwellen größtenteils Gusseisen mit Kugelgraphit, wie GJS700, als Werkstoff eingesetzt. Mittels des Gießens wird üblicherweise eine Kurbelwelle als Vollgussbauteil hergestellt, also ohne Hohlräume bzw. Kavitäten im Inneren der Kurbelwelle. Es ist jedoch bekannt, bei spezifisch niedrig belasteten Brennkraftmaschinen gegossene Kurbelwellen einzusetzen, deren Hauptlager oder Hublager aus Gewichtsgründen hohl gegossen sind.

Durch ständig steigende Bauteilbelastungen, insbesondere aufgrund von Turboaufladung, und andererseits durch den Wunsch, die Lagerdurchmesser zur Reibungsminderung zu reduzieren, werden immer häufiger Schmiedestähle mit entsprechend hoher Festigkeit bei der Herstellung von Kurbelwellen eingesetzt. Gegenüber Gusswerkstoffen führt dies zu einer deutlichen Gewichtserhöhung und in der Regel auch zu einer Kostenerhöhung. Die Belastungen einer Kurbelwelle in einer Brennkraftmaschine sind hochkomplex. Abhängig von einer Drehzahl, Last sowie einer Position an der Kurbelwelle kommt es während des Betriebs einer Brennkraftmaschine an der Kurbelwelle zu unterschiedlichen Belastungszuständen. Auslegungsrelevant sind jeweils die Maximalbelastungen. Bei einer Kurbelwelle ist in der Regel das an das Getriebe gekoppelte axiale Ende aufgrund einer zusammengesetzten Belastung aus Biegung und Torsion höher belastet als das entgegengesetzte axiale Ende.

Nachteile beim Einsatz von geschmiedeten Kurbelwellen sind die hohen Kosten und das hohe Gewicht aufgrund der größeren Dichte gegenüber der gegossenen Kurbelwelle. Weiterhin ist eine freie Formgebung nur eingeschränkt möglich. Eine Gewichtsreduzierung, konstruktiv bedingt im Inneren von bezogen auf die gesamte Kurbelwelle großen Massenanhäufungen, kann nur aufwendig über Zusatzbohrungen erreicht werden.

Ein Nachteil beim Einsatz von gegossenen Kurbelwellen ist deren geringere Belastbarkeit im Vergleich zu geschmiedeten Kurbelwellen. Die Ursachen hierfür liegen in den unterschiedlichen Fertigungstechnologien, die unterschiedliche Legierungen und/oder Wärmebehandlungen erfordern. Ebenso ist ein Gussgefüge naturgemäß geringer dynamisch belastbar im Vergleich zu einem geschmiedeten Gefüge.

Bei der Herstellung von Kurbelwellen mittels Gießen kommen derzeit hauptsächlich zwei Technologien zum Einsatz. In einer ersten Form werden die Kurbelwellen mittels Sandguss üblicherweise in liegender Form gegossen. Hierbei werden aus Formsand sogenannte Negativformkästen hergestellt, die zur Formgebung für das flüssige Metall dienen.

Alternativ werden die Kurbelwellen mit einem sogenannten Maskenformgießverfahren in stehender Anordnung gegossen. Beim Maskenformgießen werden sogenannte Masken mit der Form des Rohlings erzeugt. In Abhängigkeit von der äußeren Gestaltung des zu gießenden Bauteils besteht eine fertige Maske aus zwei oder mehr Maskenteilen, die beispielsweise mittels Kleben miteinander zur fertigen Maske verbunden werden. Die einzelnen Maskenteile bestehen aus harzumhülltem Formmaterial oder harzumhüllten Sanden bzw. Sand-Harz-Gemischen. Weiterhin ist in die Maske ein Angusssystem zur Zuführung des flüssigen Metalls integriert.

Die fertigen Masken werden als Vorbereitung zur Herstellung der Kurbelwelle in sogenannte Gießkübel gestellt und zur Verbesserung der Wärmeabfuhr sowie zur Stabilisierung mit Stahlkugeln umfüllt. Die gesamte Maskenform wird dann von unten ansteigend mit dem Gießmaterial befüllt. Während der Materialerstarrung übernimmt ein Speiser die Aufgabe, Materialschwindungen auszugleichen. Die Maskenformgießtechnik hat sich für den Einsatz in Großserienproduktionen etabliert. Weiterhin weist das Maskenformgießverfahren gegenüber dem Sandgussverfahren den Vorteil auf, dass insbesondere der Erstarrungsprozess auf Grund der beschleunigten Wärmeabfuhr durch die Verwendung der Stahlkugeln zu einer verbesserten Gefügequalität und Maßhaltigkeit führt.

Dennoch treten auch bei Verwendung des Maskenformgießverfahrens unterschiedliche Temperaturen bzw. unterschiedlicher Temperaturverteilungen im Gießkübel und somit im Bauteil während des Erstarrungsprozesses aus. Dies führt zu unterschiedlichen Materialeigenschaften des erstarrten Bauteils in Abhängigkeit von der während des Erstarrungsprozesses vorliegenden Abkühlrate. Insbesondere im oberen Bereich des Gießkübels herrschen thermisch bedingt höhere Temperaturen als im unteren Bereich. Dies ist dadurch begründet, dass anfänglich die Wärme durch die Stahlkugeln schnell aus dem unteren Bereich der Gießmaske abgeführt wird, sich jedoch ein Wärmestau im oberen Bereich der Stahlkugeln bildet. Dies hat zur Folge, dass die Abkühlraten während der Schmelzenerstarrung im oberen Bereich der gegossenen Kurbelwelle geringer sind als im unteren Bereich. Aufgrund der geänderten Abkühlraten entstehen andere Erstarrungsbedingungen und damit unterschiedliche Materialeigenschaften der Kurbelwelle bzw. des Bauteils.

Druckschriftlicher Stand der Technik im vorliegenden technischen Gebiet ist offenbart in den Dokumenten DE 678 539 A, GB 481 928 A, US 2,109,083 A, US 4,191,238 A und EP 1 767 288 A1.

Es ist die Aufgabe der vorliegenden Erfindung, die oben genannten Nachteile des Standes der Technik zu überwinden und ein im Hinblick auf die Materialeigenschaften optimiertes komplexes Gussbauteil einer Brennkraftmaschine, nämlich eine Kurbelwelle oder eine Nockenwelle, sowie ein entsprechendes Herstellungsverfahren bereitzustellen.

Die obige Aufgabe wird gelöst durch ein komplexes Gussbauteil einer Brennkraftmaschine gemäß Patentanspruch 1, eine Brennkraftmaschine mit einem komplexen Gussbauteil gemäß Patentanspruch 6, ein Kraftfahrzeug mit einer Brennkraftmaschine gemäß Patentanspruch 7 sowie ein Gießverfahren zum Herstellen eines komplexen Gussbauteils einer Brennkraftmaschine gemäß Patentanspruch 8. Weitere vorteilhafte Ausgestaltungen ergeben sich aus den abhängigen Patentansprüchen, der nachfolgenden Beschreibung sowie den Zeichnungen.

Das erfindungsgemäße komplexe Gussbauteil einer Brennkraftmaschine, nämlich eine Kurbelwelle oder eine Nockenwelle, umfasst die Merkmale gemäß Anspruch 1.

Die vorliegende Erfindung wird nun beispielhaft anhand des Herstellungsverfahrens einer Kurbelwelle als komplexes Gussbauteils verdeutlicht. Zunächst wird eine Gießform für die Kurbelwelle bereitgestellt. Weiterhin wird ein erster Kern mit einem ersten Volumen bereitgestellt. Das erste Volumen bildet im fertigen Gussbauteil nachher den ersten Hohlraum und ist anhand einer ersten Abkühlrate im ersten Bereich der zu gießenden Kurbelwelle ausgewählt. Dementsprechend wird der erste Kern in der Gießform derart angeordnet, dass er während eines nachfolgenden Erstarrungsprozesses eines Gießmaterials im ersten Bereich angeordnet ist. Danach wird das Gießmaterial, beispielsweise ein Gusseisen, in die Gießform eingefüllt und, nachdem der Erstarrungsprozess vollständig abgeschlossen ist, die fertige Kurbelwelle aus der Gießform entnommen.

Allgemein wird davon ausgegangen, dass die Abkühlraten für das gesamte komplexe Gussbauteil im Vollguss bekannt sind, also für alle Bereiche entlang der Längsachse des Gussbauteils. Das komplexe Gussbauteil im Vollguss wird auch als herkömmliches oder bekanntes Gussbauteil bezeichnet. Somit ist für das herkömmliche Gussbauteil auch die Abkühlrate im ersten Bereich bekannt. Bei den Bereichen aus der Mehrzahl von Bereichen kann es sich um Abschnitte des Bauteils handeln, wobei vorzugsweise ein Bereich nur ein Ausschnitt eines Abschnitts des Gussbauteils umfasst. Weiterhin können sich Bereiche auch zumindest teilweise überlappen oder voneinander beabstandet sein, in Abhängigkeit von der äußeren Gestaltung des komplexen Gussbauteils. Die Bereiche werden nachher unter Bezugnahme auf die Zeichnungen noch genauer ausgeführt und auch deren Funktion dargelegt.

Die jeweiligen Abkühlraten für das zu gießende erfindungsgemäße Gussbauteil sind beispielsweise aus einer Simulation ableitbar oder durch Versuche ermittelbar, um nur einige Möglichkeiten aufzuzählen. Bei der ersten Abkühlrate handelt es sich somit insbesondere um eine vorgebbare oder gewünschte Abkühlrate im ersten Bereich, die durch Anpassung des Volumens des ersten Hohlraums bzw. des ersten Kerns variierbar ist. Daher variiert auch das Volumen des ersten Kerns und damit des resultierenden ersten Hohlraums abhängig von der gewünschten Abkühlrate im ersten Bereich.

Auf diese Weise ist die erste Abkühlrate im ersten Bereich wie gewünscht einstellbar. Eine gewünschte Einstellung kann beispielsweise so erfolgen, dass das gesamte erfindungsgemäße Gussbauteil möglichst gleichmäßig abkühlt, also mit vorzugsweise derselben Abkühlgeschwindigkeit. Dies hat einen vorteilhaften Einfluss auf die Festigkeit des resultierenden komplexen Gussbauteils.

Das Verhältnis des Volumens des ersten Kerns bzw. des ersten Hohlraums bezogen auf das Volumen des ersten Bereichs wird im Folgenden auch als erstes Relativvolumen bezeichnet. Der erste Kern zur Bildung des ersten Hohlraums im ersten Bereich ist hierbei auf keine bestimmte Form beschränkt. Vielmehr ergibt sich die Form in Abhängigkeit von der gewünschten ersten Abkühlrate im ersten Bereich.

Zusammenfassend ist ein Vorteil des erfindungsgemäßen komplexen Gussbauteils daher, dass eine Abkühlrate im ersten Bereich aufgrund des verwendeten Kerns im Vergleich zum herkömmlichen Gussbauteil im Vollguss, also ohne Hohlraum, in diesem Bereich erhöht werden kann. Durch die Anpassung der Abkühlrate im ersten Bereich beispielsweise an die Abkühlraten der übrigen Bereiche sind ähnlichen oder gleichen Materialeigenschaften entlang der Längsachse des komplexen Gussbauteils einstellbar, wenn dies gewünscht ist. Auch ist eine bewusste Einstellung unterschiedlicher Materialeigenschaften durch die Einstellung der ersten Abkühlrate im ersten Bereich aufgrund des verwendeten Kerns möglich. Ein Ergebnis dieser Vorgehensweise ist zudem, dass das komplexe Gussbauteil im ersten Bereich eine verringerte Materialdicke aufweist.

Gemäß der Offenbarung weist das komplexe Gussbauteil einen zweiten Hohlraum in einem zweiten Bereich aus der Mehrzahl der Bereiche auf. Ein zweites Volumen des zweiten Hohlraums ist abhängig von einer zweiten Abkühlrate im zweiten Bereich ausgewählt. Der erste Hohlraum weist bezogen auf den ersten Bereich beispielsweise ein kleineres Volumen als der zweite Hohlraum bezogen auf den zweiten Bereich auf. Eine erste Abkühlrate ist im ersten Bereich hierbei höher als eine zweite Abkühlrate im zweiten Bereich, wobei als Referenz ein herkömmliches Gussbauteil im Vollguss dient, wie eingangs erläutert. Die gewünschten ersten und zweiten Abkühlraten können sich daher gleichen. Vorzugsweise ist so eine erste Materialdicke im ersten Bereich des komplexen Gussbauteils größer als eine zweite Materialdicke im zweiten Bereich des komplexen Gussbauteils.

Um dies zu erreichen wird beim Gießverfahren ein zweiter Kern mit einem zweiten Volumen bereitgestellt, welches anhand einer zweiten Abkühlrate im zweiten Bereich der zu gießenden Kurbelwelle ausgewählt wurde. Zudem weist der zweite Kern beispielsweise ein größeres Volumen bezogen auf den zweiten Bereich auf als der erste Kern bezogen auf den ersten Bereich. Dies ist darin begründet, dass der zweite Bereich bezogen auf das herkömmliche Gussbauteil im Vollguss beispielsweise eine kleinere Abkühlrate aufweist als der erste Bereich. Damit beispielsweise der erste und der zweite Bereich während der Erstarrung des erfindungsgemäßen Gussbauteils nun als gewünschte Abkühlraten dieselben Abkühlraten aufweisen, muss das Volumen des zweiten Kerns bezogen auf den zweiten Bereich größer sein als das Volumen des ersten Kerns bezogen auf den ersten Bereich. Vorzugsweise weisen der erste und/oder der zweite Bereich ein, bezogen auf das Volumen des gesamten erfindungsgemäßen Gussbauteils, großes Volumen auf. Bezogen auf ein herkömmliches Gussbauteil handelt es sich somit um Bereiche mit Materialanhäufung, was später ebenfalls detailliert erläutert wird. Besonders bevorzugt ist, wenn der erste und der zweite Bereich ein ähnliches oder gleiches Volumen aufweisen, wodurch sich auch eine unterschiedliche Materialdicke der beiden Bereiche ergibt.

Das Anordnen des ersten und des zweiten Kerns in der Gießform erfolgt somit so, dass während eines nachfolgenden Erstarrungsprozesses eines Gießmaterials der erste Kern im Bereich mit der ersten Abkühlrate und der zweite Kern im Bereich mit der zweiten Abkühlrate angeordnet sind. In einer Ausführungsform sind die beiden Kerne über einen Steg miteinander verbunden, was im späteren Gussbauteil zu einer Verbindung der beiden Hohlräume durch einen Kanal führt. Auf diese Weise kann ein relativer Abstand der verwendeten Kerne zueinander sichergestellt werden und Gießmaterial eingespart werden.

Wird nun das Gießmaterial in die Gießform eingefüllt, dann bildet sich bei einem nachfolgenden Erstarrungsprozess der zweite Hohlraum mit dem beispielsweise größeren Relativvolumen im zweiten Bereich mit der im Vergleich zum ersten Bereich geringeren Abkühlrate aus. Dies bedeutet, dass im zweiten Bereich auch die Materialdicke des komplexen Gussbauteils geringer ist als im ersten Bereich. Auf diese Weise können die Materialeigenschaften im ersten und zweiten Bereich so optimiert werden, dass das komplexe Gussbauteil später in beiden Bereichen möglichst gleiche Materialeigenschaften aufweist. In einer bevorzugten Ausführungsform ist eine erste Materialdicke im ersten Bereich des komplexen Gussbauteils daher größer als eine zweite Materialdicke im zweiten Bereich des komplexen Gussbauteils. Die obigen Ausführungen zum ersten Hohlraum gelten zudem analog für den zweiten Hohlraum.

Ein Vorteil des entsprechend hergestellten komplexen Gussbauteils ist weiterhin, dass die Wanddicken im ersten und im zweiten Bereich des Gussbauteils in Abhängigkeit von der jeweiligen Abkühlrate während des Erstarrungsprozesses optimiert sind. An den gemäß Stand der Technik eine geringe Abkühlgeschwindigkeit bzw. Abkühlrate aufweisenden Stellen bzw. Bereichen entstehen nun höhere Abkühlgeschwindigkeiten und damit verbesserte Materialeigenschaften. Auf diese Weise ist auch eine Volumenabhängigkeit des Erstarrungsprozesses optimiert. Das Ergebnis ist ein komplexes Gussbauteil einer Brennkraftmaschine, das an jeder Stelle der beiden Bereiche, vorteilhafterweise im gesamten Gussbauteil, die gewünschten Materialeigenschaften aufweist. Weiterhin ist so ein Gewichtsvorteil gegenüber geschmiedeten komplexen Bauteilen einer Brennkraftmaschine, insbesondere einer Kurbelwelle oder Nockenwelle, realisierbar, wodurch ebenfalls ein Verbrauchsvorteil bei der Verwendung des erfindungsgemäßen Gussbauteils in einer Brennkraftmaschine realisiert ist. Aufgrund der von der Abkühlrate während des Erstarrungsprozesses abhängigen Größe der Hohlräume im Inneren des erfindungsgemäßen Gussbauteils ergibt sich zudem ein geringerer Materialbedarf im Vergleich zu einem herkömmlichen Gussbauteil ohne Hohlräume oder mit gleichmäßig ausgebildeten Hohlräumen. Somit kann ein Gewichts- sowie Kostenvorteil von gegossenen Gussbauteilen, insbesondere Kurbel- oder Nockenwellen, auch bei hoch belasteten Brennkraftmaschinen, realisiert werden.

Erfindungsgemäß weist das komplexe Gussbauteil eine Mehrzahl von Hohlräumen auf, wobei jeder Hohlraum aus der Mehrzahl der Hohlräume in einem Bereich des Gussbauteils angeordnet ist und ein jeweiliges Volumen der Hohlräume von der spezifischen Abkühlrate bezogen auf den jeweiligen Bereich abhängt und vorzugsweise entlang der Längsachse des komplexen Gussbauteils zunimmt, sodass vorzugsweise die entsprechende Materialdicke im jeweiligen Bereich des jeweiligen Hohlraums entlang der Längsachse des komplexen Gussbauteils entsprechend abnimmt. In einer ersten Ausführungsform ist die Mehrzahl der Bereiche mit der Mehrzahl der Hohlräume identisch, so dass in jedem Bereich ein Hohlraum vorhanden ist. In einer alternativen Ausführungsform sind mehr Bereiche als Hohlräume vorhanden, wobei in diesem Fall insbesondere ein Bereich, der bereits eine gewünschte Abkühlrate aufweist, keinen zusätzlichen Hohlraum aufweist.

Wieder Bezug nehmend auf das Herstellungsverfahren bzw. Gießverfahren wird hierfür eine Mehrzahl von Kernen mit von den Abkühlraten der jeweiligen Bereiche abhängigen Volumina verwendet, beispielsweise sind die Volumina der Kerne verschieden. Eine Anordnung der Kerne innerhalb der Gießform erfolgt dann so, dass der Kern mit dem kleinsten Relativvolumen im Bereich mit der höchsten Abkühlrate angeordnet wird und der Kern mit dem größten Relativvolumen im Bereich mit der geringsten Abkühlrate, wobei die Abkühlrate sich in diesem Fall auf das herkömmliche Gussbauteil bezieht, was später unter Bezugnahme auf die Zeichnung detailliert ausgeführt wird und ebenfalls bereits eingangs erläutert wurde. Die übrigen Kerne werden gemäß dem obigen Prinzip in Abhängigkeit von ihrem Relativvolumen dazwischen angeordnet. Die Kerne sind gemäß einer Ausführungsform, wie bereits oben für den ersten und den zweiten Kern beschrieben, mittels Stegen miteinander verbunden. Dabei können in Abhängigkeit von der Anzahl der verwendeten Kerne und deren Positionierung im Gussbauteil unterschiedliche Anzahlen von Kernen über solche Stege miteinander verbunden werden. Beispielsweise können immer zwei, drei oder vier Kerne mittels Stegen miteinander verbunden werden, so dass im späteren Gussbauteil zwei, drei oder vier Hohlräume mittels eines Kanals miteinander verbunden sind. Die obigen Ausführungen zum ersten und zum zweiten Kern bzw. Hohlraum gelten analog für eine Mehrzahl von Kernen bzw. Hohlräumen. Ein Vorteil dieses komplexen Gussbauteils ist, dass die Materialeigenschaften auf diese Weise noch genauer einstellbar sind und der Erstarrungsprozess so vorteilhaft beeinflussbar ist.

In einer weiteren bevorzugten Ausführungsform wird jeder Bereich der Kurbelwelle entweder durch ein Hauptlager oder ein Hublager gebildet. Beispielhaft wird nun auf eine Kurbelwelle mit vier Hublagern und fünf Hauptlagern Bezug genommen. Die Reihenfolge der Lager entlang der Längsachse ist dabei Hauptlager eins, Hublager eins, Hauptlager zwei, Hublager zwei, Hauptlager drei, Hublager drei, Hauptlager vier, Hublager vier und Hauptlager fünf. Als Hauptlager gelten hierbei die mittig auf der Längsachse angeordneten Abschnitte der Kurbelwelle, wohingegen die Hublager radial versetzt zur mittig durch die Kurbelwelle verlaufenden Längsachse angeordnet sind, was später unter Bezugnahme auf die Zeichnungen verdeutlicht wird. Vorzugsweise umfasst der erste Bereich ein Hauptlager an einem der axialen Enden der Kurbelwelle und/oder der zweite Bereich das Hauptlager am entgegengesetzten axialen Ende. Insbesondere bei Anwendung eines Maskenformgießverfahrens in stehender Anordnung, wobei der Anguss von der Getriebeseite der zu gießenden Kurbelwelle erfolgt, befindet sich der erste Hohlraum in einem Getriebeende der Kurbelwelle. Das Getriebeende ist hierbei das Ende, das bei der späteren Verwendung der Kurbelwelle in einer Brennkraftmaschine an ein Getriebe koppelbar ist bzw. daran gekoppelt wird.

Weiterhin bevorzugt ist bei der Kurbelwelle, die in jedem Hublager einen Hohlraum aufweist, dass ein Volumen der Hohlräume bezogen auf den jeweiligen Bereich, also das jeweilige Hublager, entlang der Längsachse der Kurbelwelle zunimmt. Wie bereits oben erläutert umfasst die Kurbelwelle eine Mehrzahl von Hohlräumen, wobei ein jeweiliges Volumen der Hohlräume entlang der Längsachse des komplexen Gussbauteils zunimmt, sodass die Materialdicke im Bereich der jeweiligen Hohlräume entlang der Längsachse entsprechend abnimmt.

In einer bevorzugten Ausführungsform ist die Kurbelwelle für eine Brennkraftmaschine mit vier Zylindern und weist acht Hohlräume auf. Vier Hohlräume sind hierbei in den Bereichen der Hublager angeordnet und mindestens ein Hohlraum ist im Bereich eines der beiden Hauptlager an den axialen Enden angeordnet. Die verbleibenden drei Hohlräume sind in den Bereichen der verbleibenden drei Hauptlager angeordnet, wobei kein Hohlraum im Bereich des verbleibenden Hauptlagers am verbleibenden axialen Ende vorgesehen ist.

Eine erfindungsgemäße Brennkraftmaschine umfasst eine erfindungsgemäße Kurbelwelle oder Nockenwelle. Für die Brennkraftmaschine ergeben sich die oben beschrieben Vorteile, sodass diese an dieser Stelle nicht erneut wiederholt werden.

Ein erfindungsgemäßes Kraftfahrzeug weist eine erfindungsgemäße Brennkraftmaschine auf. Im Hinblick auf das erfindungsgemäße Kraftfahrzeug und die entsprechenden Vorteile wird ebenfalls auf die obigen Ausführungen zum erfindungsgemäßen komplexen Gussbauteil, nämlich der Kurbelwelle oder Nockenwelle, verwiesen.

Ein erfindungsgemäßes Gießverfahren zum Herstellen eines erfindungsgemäßen komplexen Gussbauteils einer Brennkraftmaschine, nämlich einer Kurbelwelle oder einer Nockenwelle, umfasst die Schritte gemäß Anspruch 8. Mit dem erfindungsgemäßen Gießverfahren ist die oben beschriebene Kurbelwelle oder Nockenwelle herstellbar. Im Hinblick auf die sich daraus ergebenden Vorteile wird ebenfalls auf die obigen Ausführungen zur Kurbelwelle oder Nockenwelle verwiesen. In einer besonders bevorzugten Ausführungsform wird neben der Abkühlrate auch noch eine zu erwartende Belastung des fertigen Gussbauteils im vorgebbaren Bereich berücksichtigt, so dass das Gussbauteil besonders optimal im Hinblick auf das spätere Einsatzgebiet auslegbar ist. Zudem umfassen die einzelnen Bereiche aus der Mehrzahl von Bereichen zusammen vorzugsweise ein großes Volumen bezogen auf das gesamte Bauteil. Bei den einzelnen Bereichen handelt es sich also insbesondere um Bereiche mit Materialanhäufungen, bezogen auf ein herkömmliches Gussbauteil im Vollguss.

Das offenbarte Gießverfahren umfasst den weiteren Schritt des Bereitstellens eines zweiten Kerns mit einem zweiten Volumen, das anhand einer zweiten Abkühlrate in einem zweiten Bereich aus der Mehrzahl von Bereichen des Gussbauteils während eines Erstarrungsprozesses ausgewählt wurde, wobei insbesondere das erste Volumen des ersten Kerns bezogen auf den ersten Bereich kleiner ist als das zweite Volumen des zweiten Kerns bezogen auf den zweiten Bereich. Im Hinblick auf die sich entsprechend ergebenden Vorteile wird ebenfalls auf die obigen Ausführungen zum komplexen Gussbauteil verwiesen.

Erfindungsgemäß wird eine Mehrzahl von Kernen bereitgestellt, die derart in der Gießform angeordnet werden, dass ein Volumen des jeweiligen Kerns abhängig ist von der spezifischen Abkühlrate bezogen auf den jeweiligen Bereich, in dem er angeordnet wird, wobei vorzugsweise das Volumen entlang einer Längsachse des zu gießenden Gussbauteils zunimmt, wobei die jeweiligen Bereiche vorzugsweise ein bezogen auf das gesamte Bauteil großes Volumen umfassen und insbesondere gleich große Volumina. Auf diese Weise wird der Kern mit dem größten Relativvolumen immer im Bereich mit der geringsten Abkühlrate und der Kern mit dem kleinsten Relativvolumen immer im Bereich mit der größten Abkühlrate angeordnet, wobei die Abkühlrate sich in diesem Fall auf das herkömmliche Gussbauteil bezieht. Die übrigen Kerne werden dazwischen in Abhängigkeit von ihrem Relativvolumen so angeordnet, dass das Relativvolumen mit abnehmender Abkühlrate bezogen auf das Gussbauteil gemäß Stand der Technik zunimmt. Dies hat den weiteren Vorteil, dass die Materialdicke im jeweiligen Bereich des erfindungsgemäßen Gussbauteils, nämlich der Kurbelwelle oder Nockenwelle, wunschgemäß einstellbar ist. Zudem ist bei der Kurbelwelle oder Nockenwelle eine gewünschte oder vorgebbare Abkühlrate im jeweiligen Bereich einstellbar. Somit können insbesondere Materialeigenschaften des komplexen Gussbauteils, nämlich der Kurbelwelle oder Nockenwelle in Abhängigkeit von den Abkühlraten während des Gießprozesses optimal an einen jeweiligen Verwendungszweck des Gussbauteils angepasst werden.

Weiterhin bevorzugt ist, dass als Material für die Kerne ein Material gewählt wird, das eine hohe Wärmeentzugsgeschwindigkeit aufweist, beispielsweise ein Chromerz-Sand. Gerade der Chromerz-Sand weist im Vergleich zu herkömmlichem Quarzsand bessere Wärmabführeigenschaften auf, was das Erstarren des Gussbauteils im Hinblick auf die resultierenden Materialeigenschaften weiterhin positiv beeinflusst. Neben dem Material für die Kerne weist auch das Material der Stützstruktur zur Anordnung der Kerne innerhalb der Gießform eine hohe Wärmeentzugsgeschwindigkeit auf. Dementsprechend kann auch die Stützstruktur aus Chromerz-Sand gebildet sein. Alternativ oder zusätzlich dazu kann die Stützstruktur zumindest teilweise auch ein Metall umfassen, so dass die Erstarrung zusätzlich positiv beeinflusst ist.

Vorzugsweise ist das Gießverfahren ein Maskenformgießverfahren. Hierbei wird insbesondere die Gießform in insbesondere zwei Teilen bereitgestellt, wobei ein Anordnen der Kerne in der Gießform erfolgt, bevor die beiden Teile der Gießform miteinander beispielsweise durch Kleben verbunden werden. Die Anordnung der Kerne im Inneren der Gießform erfolgt vorzugsweise mittels Stützstellen bzw. Stützstrukturen, so dass gerade bei einer Mehrzahl von Kernen diese auch untereinander über entsprechende Stege miteinander verbunden sind. Die Anzahl der miteinander über Stege verbundenen Kerne ist dabei variabel. Die mit den Kernen ausgestattete und zusammengeklebte Gießform wird zum Einfüllen des Gießmaterials stehend in einem Gießkübel angeordnet und von unten befüllt. Eine entsprechende Fixierung der Gießform im Gießkübel erfolgt mittels Stahlkugeln, die hierbei auch eine Wärmeabfuhrfunktion übernehmen. Besonders bevorzugt ist, wenn das Angießen im Fall einer zu gießenden Kurbelwelle von der Getriebeseite her erfolgt.

Wird nun das Gießmaterial in die Gießform eingefüllt, dann ist bei einem nachfolgenden Erstarrungsprozess die Abkühlrate im unteren Bereich der Gießform am höchsten. In Längsrichtung nach oben steigend nimmt die Abkühlrate beispielsweise kontinuierlich ab. Da die Kerne bezogen auf eine Kurbelwelle vorzugsweise im Bereich der Hauptlager oder Hublager angeordnet sind, ergibt sich in diesen Bereichen nun aufgrund der unterschiedlichen Relativvolumina der Kerne eine im Vergleich zu einer herkömmlichen Kurbelwelle verringerte Materialdicke. Auf diese Weise ist der negative Effekt durch eine verringerte Abkühlrate insbesondere im oberen Bereich des komplexen Gussbauteils ausgleichbar. Ein Entfernen der Kerne aus dem fertigen Gussbauteil erfolgt auf die übliche und bekannte Weise, so dass diese hier nicht näher erläutert wird.

Nachfolgend wird die vorliegende Erfindung unter Bezugnahme auf die Zeichnungen detailliert beschrieben. In den Zeichnungen zeigen gleiche Bezugszeichen gleiche Bauteile. Es zeigen:
Fig. 1 einen Schnitt durch eine erfindungsgemäße Kurbelwelle,
Fig. 2 einen Schnitt durch einen Abschnitt einer Kurbelwelle ohne Hohlraum,
Fig. 3 einen Schnitt durch einen Abschnitt einer Kurbelwelle mit markiertem berücksichtigtem Bereich,
Fig. 4 einen Schnitt durch einen Abschnitt einer Kurbelwelle mit markiertem berücksichtigtem Bereich und Hohlraum,
Fig. 5 eine Hälfte einer Maskengießform,
Fig.6 einen schematischen Verfahrensablauf eines erfindungsgemäßen Gießverfahrens.

Die vorliegende Erfindung wird detailliert anhand einer Kurbelwelle als komplexes Gussbauteil beschrieben, wobei auch andere komplexe Gussbauteile einer Brennkraftmaschine, wie eine Nockenwelle, mit dem gleichen Herstellungsverfahren erzeugt werden können. Als komplexes Gussbauteil einer Brennkraftmaschine wird eine gegossene Kurbelwelle oder Nockenwelle verstanden.

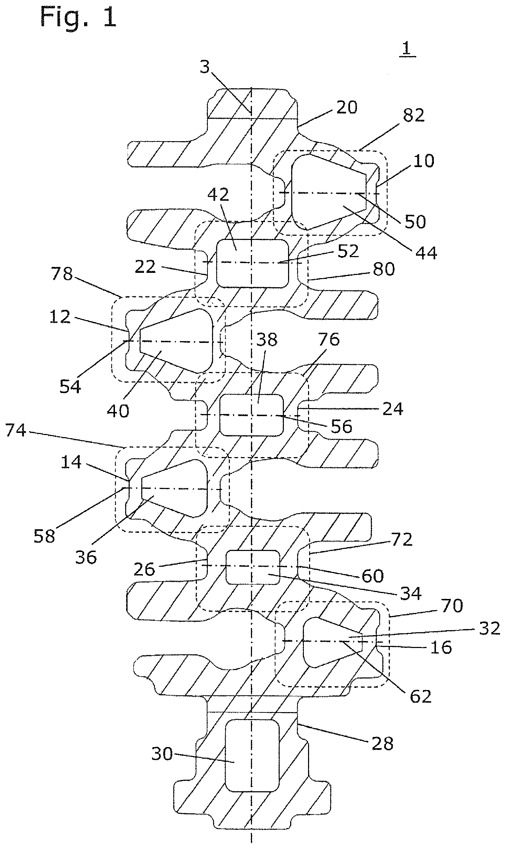

Fig. 1 zeigt eine Schnittansicht durch ein erfindungsgemäßes komplexes Gussbauteil in Form der Kurbelwelle 1. Die Kurbelwelle 1 weist eine Längsachse 3 auf und verfügt über vier Hublagern 10, 12, 14 und 16 sowie fünf Hauptlager 20, 22, 24, 26 und 28. Für jedes der vier Hublager 10, 12, 14 und 16 und für vier der fünf Hauptlager 20, 22, 24 und 26 ist zudem eine jeweilige Achse 50, 52, 54, 56, 58, 60, 62 eingezeichnet, die quer zur Längsachse 3 der Kurbelwelle 1 verläuft. So weist beispielsweise das erste Hublager 10 die Achse 50 auf und das vierte Hublager 28 die Achse 62. Das fünfte Hauptlager 28 stellt die Getriebeseite bzw. das Getriebeende sowie ein erstes axiales Ende der Kurbelwelle 1 dar. Dementsprechend stellt das erste Hauptlager 20 das zweite axiale Ende dar.

Die Kurbelwelle 1 umfasst weiterhin acht Bereiche, von denen nur sieben Bereiche 70, 72, 74, 76, 78, 80 und 82 markiert sind. Im vorliegenden Fall umfassen diese acht Bereiche 70, 72, 74, 76, 78, 80 und 82 jeweils ein Lager, wobei das erste Hauptlager 20 keinem Bereich zugeordnet ist. Beispielsweise umfasst der erste Bereich 70 das vierte Hublager 16 und der achte Bereich 82 das erste Hublager 10.

Im Inneren der Kurbelwelle 1 sind acht Hohlräume 30, 32, 34, 36, 38, 40, 42 und 44 im Bereich der jeweiligen Haupt- 20, 22, 24, 26 und 28 und Hublager 10, 12, 14 und 16 vorgesehen. Durch eine Stützstruktur in der Realität eventuell vorhandene Kanäle, die zwei oder mehrere Hohlräume 30, 32, 34, 36, 38, 40, 42 und 44 untereinander verbinden oder eine Öffnung zur Oberfläche der Kurbelwelle 1 darstellen, wurden aus Gründen der besseren Verständlichkeit nicht dargestellt. Für ein Volumen der Hohlräume gilt, dass dieses abhängig von der Abkühlrate im jeweiligen Bereich der Kurbelwelle 1 ausgewählt wird. Hierzu wird nun zur besseren Verständlichkeit zunächst auf das erfindungsgemäße Herstellungsverfahren eingegangen.

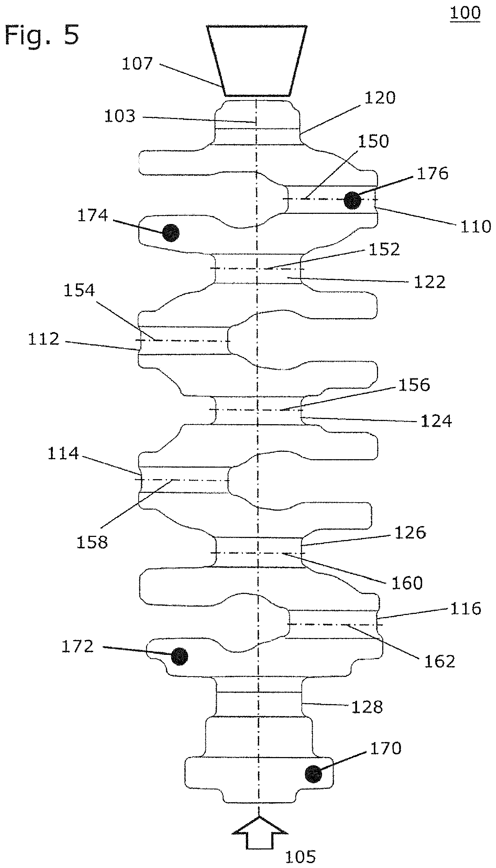

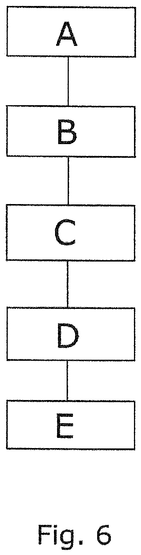

Die Kurbelwelle als komplexes Gussbauteil wird mittels eines vorzugsweise stehenden Maskenformgießverfahrens hergestellt, dessen Verfahrensablauf in Figur 6 schematisch dargestellt ist. Zunächst wird eine Gießform in Schritt A bereitgestellt. Ein Beispiel einer Maskenhälfte 100 für eine Kurbelwelle 1 ist in Fig. 5 gezeigt.

Der Anguss während des späteren Gießprozesses erfolgt beim beispielhaften stehenden Maskenformgießverfahren von unten. Bezug nehmend auf Figur 5 ist die Füllrichtung durch den Pfeil 105 dargestellt, wobei im Gegensatz zu herkömmlichen Maskenformgießverfahren die Getriebeseite der fertigen Kurbelwelle 1 mit dem fünften Hauptlager 28 nach dem Gießen unten angeordnet ist.

Die gesamte Maskenform wird, was später erläutert wird, von unten ansteigend mit dem Gießmaterial gefüllt, vorzugsweise mit Gusseisen. Während der sich daran anschließenden Materialerstarrung übernimmt ein Speiser 105 die Aufgabe, Materialschwindungen auszugleichen. Analog zu der Kurbelwelle 1 wurden auch in der Maskengießform 100 die vier Hublagerbereiche 110, 112, 114 und 116 sowie die fünf Hauptlagerbereiche 120, 122, 124, 126 und 128 gekennzeichnet. Ebenso sind die Achsen 150, 152, 154, 156, 158, 160, 162 der jeweiligen sich ergebenden Lager eingezeichnet.

Im herkömmlichen Gießprozess würden die zwei Hälften der Maskengießform nun zusammengesetzt und es würde eine Befüllung mit Gießmaterial stattfinden, ohne das Kerne zur Ausbildung von Hohlräumen darin vorgesehen sind. Als Abkühlraten würde sich die eingangs erläuterte Verteilung ergeben, dass am unteren Ende, in dem dargestellten Fall also am Getriebeende, die größte Abkühlrate vorliegt und am entgegengesetzten axialen Ende die geringste Abkühlrate. An beispielhaften vier Messpunkten 170, 172, 174 und 176 wäre die sich ergebende Zugfestigkeit dann so, dass die Zugfestigkeit im zweiten Messpunkt 172 geringer wäre als im ersten Messpunkt 170 und die Zugfestigkeit im dritten Messpunkt 174 kleiner als im zweiten Messpunkt 172.

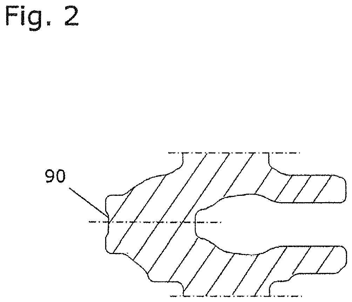

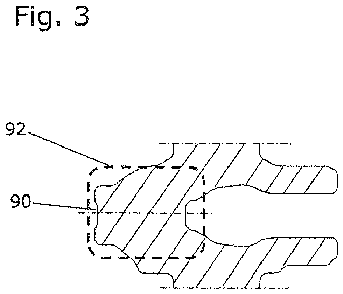

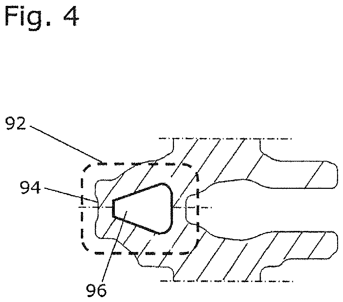

Daher wird in Schritt B eine Mehrzahl von Kernen bereitgestellt, beispielsweise acht Kerne. Die Gestaltung der Kerne, also ihre Form und ihr Volumen, hängen von dem Bereich ab, in dem sie in der Gießform bzw. dem Gussbauteil angeordnet werden sollen. Hierzu wird auf die Fig. 2 bis 4 zur besseren Verständlichkeit eingegangen. Fig. 2 zeigt dabei einen Abschnitt einer herkömmlichen Kurbelwelle, der beispielsweise ein Hublager 90 umfasst. In Fig. 3 ist dieses Hublager 90 mit einem markierten Bereich 92 versehen, von dem das Volumen des Kerns für den Gießprozess und damit des späteren Hohlraums abhängt. Übertragen auf die erfindungsgemäße Kurbelwelle 1 symbolisiert der Bereich 92 die Bereiche 70, 72, 74, 76, 78, 80 und 82. Für den beispielhaften Bereich 92 ist die Abkühlrate während des Erstarrungsprozesses bekannt, beispielsweise durch Simulation, Versuche, oder ähnliches. Aufgrund der bekannten Abkühlrate werden nun ein Volumen eines Kerns, und damit ein Volumen des späteren Hohlraums 96 im erfindungsgemäßen Abschnitt 94, siehe Fig. 4, so gewählt, dass die anschließend resultierende Abkühlrate einer gewünschten Abkühlrate entspricht, also beispielsweise möglichst nah an der höchsten Abkühlrate des Gussbauteils liegt oder auf einer gewünschten Materialeigenschaft im markierten Bereich basiert. Das Verhältnis des Volumens des resultierenden Hohlraums 96 bezogen auf den Bereich 92 wird nachfolgend als Relativvolumen bezeichnet. Dies gilt analog für die Hohlräume 32, 34, 36, 38, 40, 42 und 44 bezogen auf die Bereiche 70, 72, 74, 76, 78, 80 und 82. In Abhängigkeit von den Abkühlraten liegt das Relativvolumen bevorzugt zwischen 25 und 75 %. In einer besonders bevorzugten Ausführungsform kann neben der Abkühlrate auch eine spätere zu erwartende Belastung des Bauteils in dem jeweiligen Bereich 92 bei der Auslegung des Relativvolumens des Hohlraums 96 berücksichtigt werden.

Nun wieder Bezug nehmend auf das erfindungsgemäße Gießverfahren wird als erster Kern der Kern bezeichnet, der das kleinste Volumen bezogen auf seinen Bereich aufweist, also das kleinste Relativvolumen. Als zweiter Kern wird der Kern bezeichnet, der das größte Relativvolumen aufweist. Der erste Kern weist somit ein kleineres Relativvolumen als der zweite Kern auf. Die verbleibenden sechs Kerne weisen ein Relativvolumen auf, das zwischen dem ersten und dem zweiten Relativvolumen liegt.

Das Anordnen der acht Kerne im Inneren der Gießform erfolgt in Schritt C. Dabei werden die acht Kerne so im Inneren der Gießform angeordnet, dass sich der erste Kern in einem Bereich mit einer ersten Abkühlrate befindet. Bezogen auf ein herkömmliches Gussbauteil ist die erste Abkühlrate im ersten Bereich größer als eine zweite Abkühlrate in einem zweiten Bereich, in dem der zweite Kern angeordnet ist. Der erste Kern sorgt für die Ausbildung des ersten Hohlraums 30, wobei der zweite Kern den zweiten Hohlraum 44 ausbildet. Weiterhin werden die acht Kerne vorzugsweise so im Inneren der Gießform angeordnet, dass sie sich in Bereichen befinden, die einzeln oder zusammen ein, bezogen auf das gesamte Gussbauteil, großes Volumen aufweisen. Bei einem Gussbauteil gemäß Stand der Technik würden diese Bereiche auch als Bereiche mit Materialanhäufungen bezeichnet.

Die Anordnung der acht Kerne erfolgt über Stützstellen bzw. eine Stützstruktur in der Maskengießform 100. Mittels der Stützstruktur können zwei oder mehr Kerne miteinander verbunden sein, so dass sich im späteren Gussbauteil entsprechende Verbindungskanäle zwischen den zwei oder mehr Kernen und/oder der Oberfläche des resultierenden Gussbauteils ergeben. Als Material für die acht Kerne, und vorzugsweise auch für die jeweilige Stützstruktur, wird Chromerz-Sand verwendet.

Nachdem die acht Kerne mittels der Stützstruktur in der ersten Hälfte der Maskengießform 100 angeordnet wurden, wird die zweite Hälfte der Maskengießform mit der ersten Hälfte der Maskengießform 100 verbunden, beispielsweise mittels Kleben. Nun wird die Maskengießform in einem Gießkübel angeordnet und dort mit Stahlkugeln fixiert, wie bereits aus dem Stand der Technik bekannt. Anschließend erfolgt in Schritt D das Einfüllen des Gießmaterials, vorzugsweise Gusseisen, von unten.

Nach dem vollständigen Erstarren des Materials in der Gießform wird das fertige Gussbauteil in Schritt E der Gießform entnommen. Die vorhandenen acht Kerne sowie die Stützstruktur können auf die im Stand der Technik bekannte Weise entfernt werden. Daher wird darauf nicht näher eingegangen.

Es ist in Fig. 1 deutlich erkennbar, dass das Volumen der Hohlräume 30, 32, 34, 36, 38, 40, 42 und 44 bezogen auf den jeweiligen Bereich 70, 72, 74, 76, 78, 80 und 82 angefangen von der Getriebeseite entlang der Längsachse 3 der Kurbelwelle 1 zunimmt. Als Konsequenz daraus nimmt die relative Materialdicke mit zunehmender Füllrichtung in den jeweiligen Bereichen 70, 72, 74, 76, 78, 80 und 82 mit Materialanhäufungen ab, also an den Stellen, an denen die Kerne angeordnet sind. Die Kerne sind insbesondere im Bereich der Hauptlager 20, 22, 24, 26 und 28 und/oder Hublager 10, 12, 14 und 16 angeordnet, da dort bei einer gegossenen Kurbelwelle 1 üblicherweise die geringsten Abkühlraten aufgrund von Materialanhäufungen vorkommen.

Die auf diese Weise hergestellte erfindungsgemäße Kurbelwelle 1 weist im Bereich eines Hauptlagers 28 einen mittels des ersten Kerns gebildeten Hohlraum 30 auf. Weitere Hohlräume 32, 36, 40 und 44 sind in den Hublagern 10, 12, 14 und 16 gebildet. Zusätzlich sind an den Hauptlagern 22, 24 und 26, also in Bereichen mit Materialanhäufungen, entlang der Längsachse 3 der Kurbelwelle 1 die Hohlräume 34, 38 und 42 vorhanden. Auf diese Weise kann an den entsprechenden Stellen die Materialdicke der Kurbelwelle 1 im Hinblick auf die Abkühlraten während des Erstarrungsprozesses im Rahmen eines Gießprozesses optimiert werden. Dies führt wiederum zu einer höheren Abkühlgeschwindigkeit und damit zu höheren Festigkeitskennwerten in den entsprechenden Bereichen, was vorteilhaft ist.

## Patentansprüche

1. Komplexes Gussbauteil einer Brennkraftmaschine, nämlich eine Kurbelwelle (1) oder eine Nockenwelle, umfassend:
eine Längsachse (3),
eine Mehrzahl von Bereichen (70, 72, 74, 76, 78, 80, 82) entlang der Längsachse (3), wobei jeder Bereich (70, 72, 74, 76, 78, 80, 82) aus der Mehrzahl der Bereiche (70, 72, 74, 76, 78, 80, 82) während eines Erstarrungsprozesses im Rahmen eines Gießprozesses eine spezifische Abkühlrate aufweist, und
eine Mehrzahl von Hohlräumen (30, 32, 34, 36, 38, 40, 42, 44), **dadurch gekennzeichnet, dass**
jeder Hohlraum (30, 32, 34, 36, 38, 40, 42, 44) aus der Mehrzahl der Hohlräume (30, 32, 34, 36, 38, 40, 42, 44) in einem Bereich (70, 72, 74, 76, 78, 80, 82) des Gussbauteils angeordnet ist und ein jeweiliges Volumen der Hohlräume (30, 32, 34, 36, 38, 40, 42, 44) abhängig ist von der spezifischen Abkühlrate bezogen auf den jeweiligen Bereich (70, 72, 74, 76, 78, 80, 82), wobei das jeweilige Volumen **der Hohlräume (30, 32, 34, 36, 38, 40, 42, 44)** entlang der Längsachse (3) des komplexen Gussbauteils zunimmt, sodass **eine** Materialdicke **des komplexen Gussbauteils** im jeweiligen Bereich (70, 72, 74, 76, 78, 80, 82) des entsprechenden Hohlraums (30, 32, 34, 36, 38, 40, 42, 44) entlang der Längsachse (3) entsprechend abnimmt.

2. Komplexes Gussbauteil gemäß Anspruch 1, wobei das komplexe Gussbauteil eine Kurbelwelle (1) ist und jeder Bereich (70, 72, 74, 76, 78, 80, 82) aus der Mehrzahl der Bereiche (70, 72, 74, 76, 78, 80, 82) umfasst mindestens teilweise entweder ein Hauptlager (20, 22, 24, 26, 28) oder ein Hublager (10, 12, 14, 16).

3. Komplexes Gussbauteil gemäß einem der vorhergehenden Patentansprüche, wobei das komplexe Gussbauteil eine Kurbelwelle (1) ist und der erste Bereich umfasst ein Hauptlager (28) an einem der axialen Enden der Kurbelwelle (1) und/oder der zweite Bereich umfasst ein anderes Hauptlager (20) am entgegengesetzten axialen Ende der Kurbelwelle (1).

4. Komplexes Gussbauteil gemäß einem der vorhergehenden Patentansprüche, wobei das komplexe Gussbauteil eine Kurbelwelle (1) ist, die in jedem Hublager (10, 12, 14, 16) einen Hohlraum (32, 36, 40, 44) aufweist, wobei ein Volumen der Hohlräume (32, 36, 40, 44) bezogen auf den jeweiligen Bereich (70, 74, 78, 82) entlang der Längsachse (3) der Kurbelwelle (1) zunimmt.

5. Komplexes Gussbauteil gemäß einem der vorhergehenden Patentansprüche, wobei das komplexe Gussbauteil acht Hohlräume (30, 32, 34, 36, 38, 40, 42, 44) aufweist und/oder wobei mindestens zwei der Hohlräume (30, 32, 34, 36, 38, 40, 42, 44) über einen Kanal miteinander in Verbindung stehen.

6. Brennkraftmaschine mit einem komplexen Gussbauteil gemäß einem der Patentansprüche 1 bis 5.

7. Kraftfahrzeug mit einer Brennkraftmaschine gemäß Patentanspruch 6.

8. Gießverfahren zum Herstellen eines komplexen Gussbauteils einer Brennkraftmaschine, nämlich einer Kurbelwelle (1) oder einer Nockenwelle, gemäß einem der Patentansprüche 1 bis 5, wobei das Verfahren die Schritte umfasst:
Bereitstellen einer Gießform,
Bereitstellen (B) einer Mehrzahl von Kernen, die derart in der Gießform angeordnet werden (C), dass ein Volumen des jeweiligen Kerns abhängig ist von einer spezifischen Abkühlrate bezogen auf den jeweiligen Bereich (70, 72, 74, 76, 78, 80, 82), in dem er angeordnet wird, wobei das jeweilige Volumen entlang einer Längsachse (3) des zu gießenden Gussbauteils zunimmt,,
Einfüllen (D) des Gießmaterials in die Gießform und
Entnehmen (E) des fertigen Gussbauteils aus der Gießform nachdem der Erstarrungsprozess vollständig abgeschlossen ist.

9. Gießverfahren nach Anspruch 8, wobei das Gießverfahren ein Maskenformgießverfahren ist.

## Claims

1. A complex cast component of an internal combustion engine, namely a crankshaft (1) or a camshaft, comprising:
a longitudinal axis (3),
a plurality of regions (70, 72, 74, 76, 78, 80, 82) along the longitudinal axis (3), wherein each region (70, 72, 74, 76, 78, 80, 82) of the plurality of regions (70, 72, 74, 76, 78, 80, 82) during a solidification process as part of a casting process has a specific cooling rate, and
a plurality of cavities (30, 32, 34, 36, 38, 40, 42, 44), **characterised in that** each cavity (30, 32, 34, 36, 38, 40, 42, 44) of the plurality of cavities (30, 32, 34, 36, 38, 40, 42, 44) is arranged in a region (70, 72, 74, 76, 78, 80, 82) of the cast component and a respective volume of the cavities (30, 32, 34, 36, 38, 40, 42, 44) is dependent on the specific cooling rate relative to the respective region (70, 72, 74, 76, 78, 80, 82), the respective volume of the cavities (30, 32, 34, 36, 38, 40, 42, 44) increasing along the longitudinal axis (3) of the complex cast component, so that a material thickness of the complex cast component in the respective region (70, 72, 74, 76, 78, 80, 82) of the corresponding cavity (30, 32, 34, 36, 38, 40, 42, 44) decreases correspondingly along the longitudinal axis (3).

2. A complex cast component according to Claim 1, wherein the complex cast component is a crankshaft (1) and each region (70, 72, 74, 76, 78, 80, 82) of the plurality of regions (70, 72, 74, 76, 78, 80, 82) at least partially comprises either a main bearing (20, 22, 24, 26, 28) or a pin bearing (10, 12, 14, 16).

3. A complex cast component according to one of the preceding claims, wherein the complex cast component is a crankshaft (1) and the first region comprises a main bearing (28) at one of the axial ends of the crankshaft (1), and/or the second region comprises another main bearing (20) at the opposite axial end of the crankshaft (1).

4. A complex cast component according to one of the preceding claims, wherein the complex cast component is a crankshaft (1) which has a cavity (32, 36, 40, 44) in each pin bearing (10, 12, 14, 16), wherein a volume of the cavities (32, 36, 40, 44) relative to the respective region (70, 74, 78, 82) increases along the longitudinal axis (3) of the crankshaft (1).

5. A complex cast component according to one of the preceding claims, wherein the complex cast component has eight cavities (30, 32, 34, 36, 38, 40, 42, 44) and/or wherein at least two of the cavities (30, 32, 34, 36, 38, 40, 42, 44) communicate with each other by way of a duct.

6. An internal combustion engine with a complex cast component according to one of Claims 1 to 5.

7. A motor vehicle with an internal combustion engine according to Claim 6.

8. A casting method for producing a complex cast component of an internal combustion engine, namely a crankshaft (1) or a camshaft, according to one of Claims 1 to 5, wherein the method comprises the steps:
providing a casting mould,
providing (B) a plurality of cores which are arranged (C) in the casting mould in such a way that a volume of the respective core is dependent on a specific cooling rate relative to the respective region (70, 72, 74, 76, 78, 80, 82) in which it is arranged, the respective volume increasing along a longitudinal axis (3) of the cast component which is to be cast,
pouring (D) the casting material into the casting mould, and
removing (E) the finished cast component from the casting mould once the solidification process has completely terminated.

9. A casting method according to Claim 8, wherein the casting method is a shell mould casting method.

## Revendications

1. Pièce coulée, complexe, d'un moteur à combustion interne à savoir un vilebrequin (1) ou un arbre à cames comprenant :
un axe longitudinal (3),
plusieurs zones (70, 72, 74, 76, 78, 80, 82) le long de l'axe longitudinal (3), chaque zone (70, 72, 74, 76, 78, 80, 82) parmi l'ensemble des zones (70, 72, 74, 76, 78, 80, 82) ayant un coefficient de refroidissement spécifique pendant le procédé de solidification dans le cadre d'un procédé de coulée, et
un ensemble de cavités (30, 32, 34, 36, 38, 40, 42, 44),
**caractérisé en ce que**
chaque cavité (30, 32, 34, 36, 38, 40, 42, 44) d'un ensemble de cavités (30, 32, 34, 36, 38, 40, 42, 44) est prévu dans une zone (70, 72, 74, 76, 78, 80, 82) de la pièce et le volume respectif des cavités (30, 32, 34, 36, 38, 40, 42, 44) dépend du coefficient de refroidissement spécifique rapporté à la zone respective (70, 72, 74, 76, 78, 80, 82), le volume respectif des cavités (30, 32, 34, 36, 38, 40, 42, 44) augmentant le long de l'axe longitudinal (3) de cette pièce coulée, complexe, de sorte qu'une épaisseur de matière de la pièce coulée, complexe, dans la zone (70, 72, 74, 76, 78, 80, 82) respective de la cavité respective (30, 32, 34, 36, 38, 40, 42, 44), diminue de façon correspondante le long de l'axe longitudinal (3).

2. Pièce coulée, complexe, selon la revendication 1,
cette pièce coulée, complexe, étant un vilebrequin (1) et chacune des zones (70, 72, 74, 76, 78, 80, 82) parmi l'ensemble des zones (70, 72, 74, 76, 78, 80, 82) comprend au moins en partie un palier principal (20, 22, 24, 26, 28) ou un palier coulissant (10, 12, 14, 16).

3. Pièce coulée, complexe, selon l'une des revendications précédentes, la pièce coulée, complexe, étant un vilebrequin (1) et la première zone comporte un palier principal (28) à l'une des extrémités axiales du vilebrequin (1) et/ou la seconde zone comprend un autre palier principal (20) à l'extrémité axiale opposée du vilebrequin (1).

4. Pièce coulée, complexe, selon l'une des revendications précédentes, la pièce coulée, complexe, étant un vilebrequin (1) qui a une cavité (32, 36, 40, 44) dans chaque palier de coulissement (10, 12, 14, 16), le volume des cavités (32, 36, 40, 44) rapporté à la zone (70, 74, 78, 82) respective, augmentant le long de l'axe longitudinal (3) du vilebrequin (1).

5. Pièce coulée, complexe, selon l'une des revendications précédentes, la pièce, coulée complexe, ayant huit cavités (30, 32, 34, 36, 38, 40, 42, 44) et/ou au moins deux des cavités (30, 32, 34, 36, 38, 40, 42, 44) communiquent par un canal.

6. Moteur à combustion interne comportant une pièce coulée, complexe, selon l'une des revendications 1 à 5.

7. Véhicule automobile comportant un moteur à combustion interne selon la revendication 6.

8. Procédé de coulée pour réaliser une pièce coulée, complexe, d'un moteur à combustion interne à savoir un vilebrequin (1) ou un arbre à cames selon l'une des revendications 1 à 5,
le procédé comprenant les étapes suivantes consistant à :
utiliser un moule de coulée,
fournir (B) un ensemble de noyaux installé dans le moule (C) pour que le volume du noyau respectif dépende du coefficient de refroidissement spécifique rapporté à la zone respective (70, 72, 74, 76, 78, 80, 82) dans laquelle il se trouve, le volume respectif augmentant le long de l'axe longitudinal (3) de la pièce coulée à réaliser,
introduire (D) la fonte dans le moule, et
extraire (E) la pièce coulée, terminée, du moule après la fin complète de la phase de solidification.

9. Procédé de coulée selon la revendication 8,
qui est un procédé de coulée en carapace.
